# EUROPEAN PATENT APPLICATION

(11) **EP 4 642 123 A1**
(43) Date of publication of application: **29.10.2025**
(21) Application number: 22968910.4
(22) Date of filing: 21.12.2022
(51) Int. Cl.: H04W 72/04, H04W 24/02

(54) **CELL MEASUREMENT METHOD AND APPARATUS, AND STORAGE MEDIUM**

(71) Applicant: Beijing Xiaomi Mobile Software Co., Ltd., Beijing 100085 (CN)
(72) Inventor: HU, Ziquan, Beijing 100085 (CN); TAO, Xuhua, Beijing 100085 (CN)
(74) Representative: Dehns Germany Partnerschaft mbB
(86) International application number: PCT/CN2022/140838
(87) International publication number: WO 2024/130609

(57) **Abstract**

The present disclosure relates to a cell measurement method and apparatus, and a storage medium. The cell measurement method is applied to a network device, and comprises: sending an NCSG configuration for L1 mobility measurement, wherein the NCSG configuration is used for instructing a user equipment to execute L1 mobility measurement of a neighboring cell.

## Description

### TECHNICAL FIELD

The present disclosure relates to the field of communication technology, and in particular to a cell measurement method, apparatus, and storage medium.

### BACKGROUND

In the current measurement configuration related to L1 mobility measurement, only the L1 mobility measurement of the serving cell of the user equipment is supported. In R18, it is clearly stated that cross-cell mobility mechanism based on L1 or L2 needs to be supported to reduce mobility delay.

However, it is currently impossible to implement L1 mobility measurement of the neighboring cell of the user equipment, which is not conducive to the mobility management of the user equipment, and thus the purpose of reducing mobility delay cannot be achieved.

### SUMMARY

In order to overcome the problems existing in the related art, the present disclosure provides a cell measurement method, apparatus, storage medium, and communication system.

According to a first aspect of the embodiments of the present disclosure, a cell measurement method is provided, which is applied to a network device, including:
sending a Network Controlled Small Gap (NCSG) configuration for an L1 mobility measurement, where the NCSG configuration is used to instruct a user equipment to perform the L1 mobility measurement of a neighboring cell.

According to a second aspect of the embodiments of the present disclosure, a cell measurement method is provided, which is applied to a user equipment, including:
receiving a Network Controlled Small Gap (NCSG) configuration for an L1 mobility measurement; and
performing the L1 mobility measurement of a neighboring cell based on the NCSG configuration.

According to a third aspect of the embodiments of the present disclosure, a cell measurement apparatus is provided, including:
a first sending module, configured to send a Network Controlled Small Gap (NCSG) configuration for an L1 mobility measurement, where the NCSG configuration is used to instruct a user equipment to perform the L1 mobility measurement of a neighboring cell.

According to a fourth aspect of the embodiments of the present disclosure, a cell measurement apparatus is provided, including:
a first receiving module, configured to receive a Network Controlled Small Gap (NCSG) configuration for an L1 mobility measurement; and
a measurement module, configured to perform the L1 mobility measurement of a neighboring cell based on the NCSG configuration.

According to a fifth aspect of the embodiments of the present disclosure, a cell measurement device is provided, including:
a processor; and
a memory for storing processor-executable instructions,

The processor is configured to perform the steps of the method described in the first aspect, or to perform the steps of the method described in the second aspect.

According to a sixth aspect of the embodiments of the present disclosure, a computer-readable storage medium is provided, having computer program instructions stored thereon. When the computer program instructions are executed by the processor, the steps of the method described in the first aspect or the steps of the method described in the second aspect are implemented.

Through the above scheme, the network device sends the NCSG configuration for the L1 mobility measurement, the NCSG configuration is used to instruct the user equipment to perform the L1 mobility measurement of the neighboring cell, and the measurement configuration of the L1 mobility measurement of the neighboring cell is implemented through the NCSG configuration, thereby implementing the L1 mobility measurement of the neighboring cell of the user equipment.

### BRIEF DESCRIPTION OF THE DRAWINGS

The drawings herein are incorporated into and constitute a part of the specification, illustrate embodiments consistent with the present disclosure, and are used together with the specification to explain the principles of the present disclosure.
Fig. 1 is a schematic diagram of a communication system according to an example embodiment
Fig. 2 is a flow chart of a cell measurement method according to an example embodiment
Fig. 3 is a schematic diagram of parameter information of the NCSG configuration according to an example embodiment.
Fig. 4 is a flow chart of a cell measurement method according to an example embodiment.
Fig. 5 is a flow chart of a cell measurement method according to an example embodiment.
Fig. 6 is a flow chart of a cell measurement method according to an example embodiment.
Fig. 7 is a flow chart of a cell measurement method according to an example embodiment.
Fig. 8 is a flow chart of a cell measurement method according to an example embodiment.
Fig. 9 is a flow chart of a cell measurement method according to an example embodiment.
Fig. 10 is a flow chart of a cell measurement method according to an example embodiment.
Fig. 11 is a flow chart of a cell measurement method according to an example embodiment.
Fig. 12 is a block diagram of a cell measurement apparatus according to an example embodiment.
Fig. 13 is a block diagram of a cell measurement apparatus according to an example embodiment.
Fig. 14 is a block diagram of a cell measurement device according to an example embodiment.
Fig. 15 is a block diagram of a cell measurement device according to an example embodiment.

### DETAILED DESCRIPTION OF THE EMBODIMENTS

Here, example embodiments will be described in detail, and examples thereof are shown in the accompanying drawings. When the following description refers to the drawings, unless otherwise indicated, the same numbers in different drawings represent the same or similar elements. The implementations described in the following example embodiments do not represent all the embodiments consistent with the present disclosure. Instead, they are only examples of devices/apparatuses and methods consistent with some aspects of the present disclosure as detailed in the attached claims.

It should be noted that all the actions to obtain signals, information, or data in the present disclosure are carried out in accordance with the relevant data protection regulations and policies of the country of residence and with the authorization given by the owner of the corresponding device.

In the description of the present disclosure, the terms, such as "first", "second", etc., are used to distinguish similar objects, and do not have to be understood as a specific order or sequence. In addition, in the description with reference to the drawings, the same mark in different drawings represents the same element unless otherwise stated.

In the description of the present disclosure, unless otherwise specified, "a plurality of" means two or more than two, and other quantifiers are similar; and "at least one (item)", "one or more (item)", or similar expressions refer to any combination of these items, including any combination of single items or plural items. For example, at least one item may represent any number. For another example, one item or more items of a, b, and c may represent: a, b, c, a-b, a-c, b-c, or a-b-c, where a, b, c may be single items or plural items; and "and/or" is a kind of association relationship that describes the associated objects, indicating that there may be three relationships. For example, A and/or B may represent: A exists alone, A and B exist at the same time, and B exists alone, where A and B may be in a singular or plural form.

In the embodiments of the present disclosure, although the operations or steps are described in a specific order in the drawings, it should not be understood that it is required to perform these operations or steps in the specific order shown or in a serial order, or to perform all the operations or steps shown to obtain the desired results. In the embodiments of the present disclosure, these operations or steps may be performed in series; these operations or steps may also be performed in parallel; or some of these operations or steps may be performed.

According to the related art, in R18, it is clearly stated that the cross-cell mobility mechanism based on L1/L2 should be supported to reduce mobility delay. However, in the current measurement configuration related to L1 mobility measurement, only the L1 mobility measurement of the serving cell is supported, and the L1 mobility measurement of the neighboring cell cannot be achieved, which is not conducive to mobility management, and thus the purpose of reducing mobility delay cannot be achieved.

In view of above, the embodiments of the present disclosure provide a cell measurement method, apparatus, and storage medium, which realize the L1 mobility measurement of the neighboring cell of the user equipment.

The present disclosure is explained in conjunction with the drawings below.

The implementation environment of the embodiments of the present disclosure is first introduced below.

The technical solution in the embodiments of the present disclosure may be applied to various communication systems. The communication system may include one or more of a 4G (the 4th Generation) communication system, a 5G (the 5th Generation) communication system, and other future wireless communication systems (such as 6G). The communication system may also include a Public Land Mobile Network (PLMN) network, a device-to-device (D2D) communication system, a Machine-to-Machine (M2M) communication system, an Internet of Things (IoT) communication system, a Vehicle-to-Everything (V2X) communication system, or one or more of other communication systems.

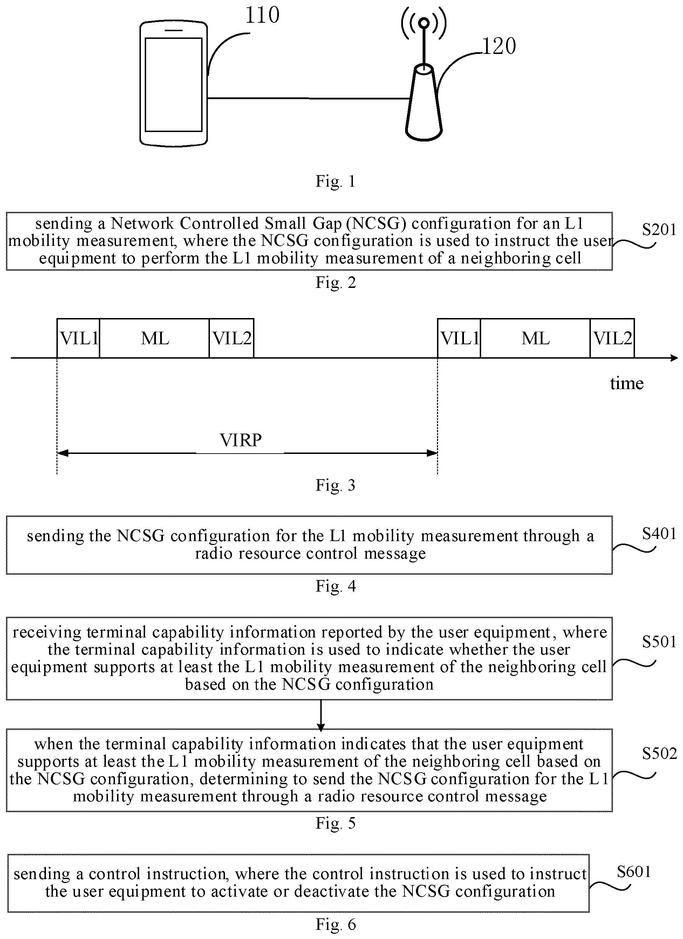

Fig. 1 is a schematic diagram of a communication system according to an example embodiment. As shown in Fig. 1, the communication system may include a user equipment 110 and a network device 120. The communication system may be used to support 4G network access technology, such as Long Term Evolution (LTE) access technology; 5G network access technology, such as New Radio Access Technology (New RAT); or other future wireless communication technologies. It should be noted that in the communication system, the number of user equipment(s) and network device(s) may be one or more. The number of user equipment(s) and network device(s) in the communication system shown in Fig. 1 is only an adaptive example, and the present disclosure is not limited in this regard.

The network device 120 in Fig. 1 may be used to support access and communication of the user equipment. For example, the network device may be an evolutional Node B (eNB or eNodeB) in LTE; the network device may also be the next Generation Node B (gNB or gNodeB) in a 5G network; the network device may also be a radio access network (NG Radio Access Network, NG-RAN) device in a 5G network; or the network device may also be a base station, a Broadband Network Gateway (BNG), an aggregation switch, or a non-3GPP (3rd Generation Partnership Project) access device in a future evolved Public Land Mobile Network (PLMN). For example, the network device in the embodiments of the present disclosure may include various forms of base stations, such as: macro base stations, micro base stations (also known as small stations), relay stations, access points, 5G base stations, or future base stations, satellites, Transmitting and Receiving Points (TRPs), Transmitting Points (TPs), mobile switching centers, and Devices-to-Devices (D2D), Machines-to-Machines (M2M), Internet of Things (IoT), Vehicle-to-Everything (V2X), or other devices that assume the function of base stations in other communications, etc., which are not specifically limited in the embodiments of the present disclosure. For the convenience of description, in all the embodiments of the present disclosure, the devices that provide wireless communication functions for terminal devices are collectively referred to as network devices or base stations.

The user equipment 110 in Fig. 1 may be an electronic device that provides voice or data connectivity. For example, the terminal device may also be called a Subscriber Unit, a Mobile Station, a Station, a Terminal, etc. For example, the user equipment may include a smart phone, a smart wearable device, a smart speaker, a smart tablet, a wireless modem, a Wireless Local Loop (WLL) station, a Personal Digital Assistant (PDA), a Customer Premise Equipment (CPE), etc. With the development of wireless communication technology, devices that can access a communication system, communicate with network devices of a communication system, communicate with other objects through a communication system, or enable a direct communication between two or more devices may all be user equipment(s) in the embodiments of the present disclosure. For example, they may be terminals and cars in smart transportation, household devices in smart homes, power meter reading instruments in smart grids, voltage monitoring instruments, environmental monitoring instruments, video monitoring instruments in smart security networks, cash registers, etc. In the embodiments of the present disclosure, the user equipment may communicate with the network device. Multiple user equipment may also communicate with each other. The user equipment may be static or mobile, and the present disclosure is not limited in this regard.

In Fig. 1, the network device 120 is configured to send a Network Controlled Small Gap (NCSG) configuration for an L1 mobility measurement, and the user equipment 110 is configured to receive the NCSG configuration for the L1 mobility measurement, and perform the L1 mobility measurement of a neighboring cell based on the NCSG configuration. The implementation process of the network device 120 sending the NCSG configuration, the implementation process of the user equipment 110 receiving the NCSG configuration, and the implementation process of the user equipment 110 performing the L1 mobility measurement of the neighboring cell based on the NCSG configuration may refer to the following related embodiments, and the present embodiment is not repeated here.

Fig. 2 is a flow chart of a cell measurement method according to an example embodiment, and the cell measurement method may be applied to the network device shown in Fig. 1, for example. With reference to Fig. 2, the cell measurement method includes the following step(s):
S201, sending a Network Controlled Small Gap (NCSG) configuration for an L1 mobility measurement, where the NCSG configuration is used to instruct the user equipment to perform the L1 mobility measurement of a neighboring cell.

In the present disclosure, the L1 mobility measurement may also be referred to as the L1 measurement.

As an example, the neighboring cell may be one or more. The network device may send the cell identifier(s) of one or more Measurement Objects (MOs) to the user equipment, where the cell identifier of the measurement object is used to indicate the corresponding neighboring cell, so that the user terminal performs the L1 mobility measurement on the neighboring cell corresponding to the cell identifier according to the cell identifier of the measurement object.

As an example, the parameter information of the NCSG configuration shown in Fig. 3 includes Visible Interruption Length (VIL) and ML (Measurement Length). Visible Interruption Length (VIL) indicates that there will be interruption to the service during this time period, that is, the service will be interrupted during the time periods of VIL1 and VIL2. Measurement Length (ML) indicates the length of time for measuring the same frequency/different frequency/different system. The user equipment may perform L1 measurement during the ML period. Based on the 3rd Generation Partnership Project (3GPP) assumption, the UE with NCSG capability has two RF chains. The serving cell uses one for data communication or measurement, and the neighboring cell uses the other, so there will be no interruption during the ML time. Therefore, during this period, the user equipment can simultaneously perform uplink and downlink service transmission, that is, there is no interruption to the service during this ML period. Visible Interruption Repetition Period (VIRP) indicates the period of VIL occurrence. For example, ML may be 5ms, VIRP may be 40ms, and VIL may be 0.5ms.

It is worth noting that the receiving object of the NSCG configuration is the user equipment. As an example, the network device may send the NCSG configuration to the user equipment in a direct sending mode. As another example, the network device may send the NCSG configuration to the user equipment in an indirect sending mode. For example, the network device may forward the NCSG configuration to the user equipment through other devices, and the other devices here may be, for example, other network devices and/or other user equipment. With regard to examples of other user equipment and/or other network devices, reference may be made to the examples of network device and user equipment in Fig. 1 above, and the present embodiment will not be repeated here.

In the above way, the network device sends the NCSG configuration for the L1 mobility measurement, and the NCSG configuration is used to instruct the user equipment to perform the L1 mobility measurement of the neighboring cell. The measurement configuration of the L1 mobility measurement of the neighboring cell is implemented through the NCSG configuration, thereby realizing the L1 mobility measurement of the neighboring cell of the user equipment. In addition, since the ML time period in the NCSG configuration does not have an interruption effect on the service, the user equipment can reduce the interruption time of the service by performing the L1 mobility measurement of the neighboring cell based on the NCSG configuration.

Fig. 4 is a flow chart of a cell measurement method according to an example embodiment. The cell measurement method may be applied to the network device shown in Fig. 1, for example. Referring to Fig. 4, step S201 shown in Fig. 2 may be implemented by the following step(s):
S401, sending the NCSG configuration for the L1 mobility measurement through a radio resource control message.

The explanation of the NCSG configuration may refer to the above-mentioned related embodiments, and the present embodiment is not repeated here.

In the above way, the NCSG configuration is sent by carrying the NCSG configuration in the Radio Resource Control (RRC) message.

In some embodiments, the NCSG configuration is the NCSG configuration configured to instruct the user equipment to perform the L3 mobility measurement. That is, the NCSG configuration for the L1 measurement can be the shared NCSG configuration for the L3 mobility measurement, so that the configuration of the network device can be reduced. In the present disclosure, the L3 mobility measurement may also be referred to as the L3 measurement.

In some embodiments, the NCSG configuration for the L1 mobility measurement may be dedicated to the L1 measurement or shared with the L3 measurement. For example, the network device may indicate whether the user equipment can use the NCSG configuration configured for the L3 measurement through a control message. When the control message indicates that the user equipment can use the NCSG configuration configured for the L3 measurement, and the user equipment needs to perform the L1 measurement, the NCSG configuration configured for the L3 measurement can be directly used, without the need for the network device to re-send the NCSG configuration for the L1 measurement, thereby reducing resource loss.

Fig. 5 is a flow chart of a cell measurement method according to an example embodiment. The cell measurement method may be applied to the network device shown in Fig. 1, for example. Referring to Fig. 5, step S401 shown in Fig. 4 may be implemented by the following steps S501 and S502.

S501, receiving terminal capability information reported by the user equipment, where the terminal capability information is used to indicate whether the user equipment supports at least the L1 mobility measurement of the neighboring cell based on the NCSG configuration.

S502, when the terminal capability information indicates that the user equipment supports at least the L1 mobility measurement of the neighboring cell based on the NCSG configuration, determining to send the NCSG configuration for the L1 mobility measurement through a radio resource control message.

The explanation of the NCSG configuration may refer to the above-mentioned related embodiments, and the present embodiment will not be repeated here.

As an example, the terminal capability information reported by the user equipment may be directly sent to the network device, or forwarded to the network device through other devices, such as other user equipment and/or other network devices. With respect to examples of other user equipment and/or other network devices, reference may be made to the examples of network device and user equipment in Fig. 1 above, and the present embodiment will not be described in detail here.

It is worth noting that when the user equipment does not support the L1 mobility measurement of the neighboring cell based on the NCSG configuration, even if the NCSG configuration is sent to the user equipment, the user equipment cannot complete the L1 mobility measurement of the neighboring cell.

Therefore, in a case that the user equipment support the L1 mobility measurement of the neighboring cell based on the NCSG configuration, it is determined to send the NCSG configuration for the L1 mobility measurement through the radio resource control message, so that the situation is avoided where the NCSG configuration for the L1 mobility measurement is still sent when the user equipment does not support the L1 mobility measurement of the neighboring cell based on the NCSG configuration, thereby avoiding waste of resources.

In some embodiments, the terminal capability information reported by the user equipment indicates support for the L1 mobility measurement of the neighboring cell based on the NCSG configuration and support for the L3 mobility measurement based on the NCSG configuration.

In this case, as an example, the above step S502 may be implemented in the following way: when the terminal capability information reported by the user equipment indicates that the L1 mobility measurement of the neighboring cell based on the NCSG configuration is supported and the L3 mobility measurement based on the NCSG configuration is supported, the NCSG configuration configured to instruct the user equipment to perform the L3 mobility measurement is sent through a radio resource control message.

As another example, the above step S502 may be implemented in the following way: when the terminal capability information reported by the user equipment indicates that the L1 mobility measurement of the neighboring cell based on the NCSG configuration is supported and the L3 mobility measurement based on the NCSG configuration is supported, the NCSG configuration dedicated to the L1 mobility measurement configured by the network device is sent through a radio resource control message.

The explanation of the NCSG configuration may refer to the above-mentioned related embodiments, and the present embodiment is not repeated here.

The NCSG configuration, which is configured to instruct the user equipment to perform the L3 mobility measurement and sent through the radio resource control message, may also be used for the L1 mobility measurement. That is, the NCSG configuration, on which the L1 mobility measurement is based, is shared with the L3 measurement.

In the above way, when it is determined that the user equipment has the capability of L1 measurement and L3 measurement, the user equipment can share the NCSG configuration for L3 measurement to perform L1 measurement, so that the resources required for the network device to reconfigure the NCSG configuration can be reduced. Alternatively, the network device may also configure the NCSG configuration dedicated to the user equipment to perform the L1 mobility measurement.

Fig. 6 is a flow chart of a cell measurement method according to an example embodiment, which may be applied to the network device shown in Fig. 1, and with reference to Fig. 6, includes the following step(s):
S601, sending a control instruction, where the control instruction is used to instruct the user equipment to activate or deactivate the NCSG configuration.

The explanation of the NCSG configuration may refer to the above-mentioned related embodiments, and the present embodiment is not repeated here.

As an example, the control instruction may be sent directly to the user equipment, or forwarded to the user equipment through other devices, such as other user equipment and/or other network devices. With regard to examples of other user equipment and/or other network devices, reference may be made to the examples of network device and user equipment in Fig. 1 above, and the present embodiment is not repeated here.

For example, the control instruction may include a first control instruction and a second control instruction, where the first control instruction is used to instruct the user equipment to deactivate the NCSG configuration, and the second control instruction is used to instruct the user equipment to activate the NCSG configuration.

It is worth noting that after the user equipment receives the first control instruction to deactivate the NCSG configuration, the NCSG configuration is in a deactivated state; and after the user equipment receives the second control instruction to activate the NCSG configuration, the NCSG configuration is in an activated state. When the NCSG configuration is in an activated state, the user equipment can perform the L1 mobility measurement of the neighboring cell based on the NCSG configuration; and when the NCSG configuration is in a deactivated state, the user equipment cannot perform the L1 mobility measurement of the neighboring cell based on the NCSG configuration.

For example, the control instructions instructing the user equipment to deactivate the NCSG configuration and activate the NCSG configuration may be indicated by the same message. Specifically, activation and deactivation of the NCSG configuration may be indicated by using fields, for example:

| | | |
|---|---|---|
| necsgstate-r18 | ENUMERATED {true} | OPTIONAL Need R |

where ncsgstate-r18 is used to represent the message describing the control instruction, ENUMERATED {true} is used to represent the field indicating the activation of the NCSG configuration, and OPTIONAL represents that the configuration of this message is optional. It is worth noting that if the control message is not configured, it indicates the deactivation of the NCSG configuration.

For example, the control instructions instructing the user equipment to deactivate the NCSG configuration and activate the NCSG configuration may be indicated by the same message. Specifically, activation and deactivation of the NCSG configuration may be indicated by a Boolean variable:

| | | |
|---|---|---|
| necsgstate-r18 | BOOLEAN | OPTIONAL Need R |

where ncsgstate-r18 is used to represent the message describing the control instruction, and BOOLEAN is used to represent activation and deactivation of the NCSG configuration. If the field is 'true', it indicates that the NCSG configuration is activated. If the field is 'false', it indicates that the NCSG configuration is deactivated. OPTIONAL indicates that the configuration of this message is optional.

In the above way, the user equipment is controlled to activate or deactivate the NCSG configuration through the control instruction sent by the network device, so that the NCSG configuration is in an activated state or an inactivated state, thereby realizing the control about whether the user equipment can perform L1 measurement based on the NCSG configuration.

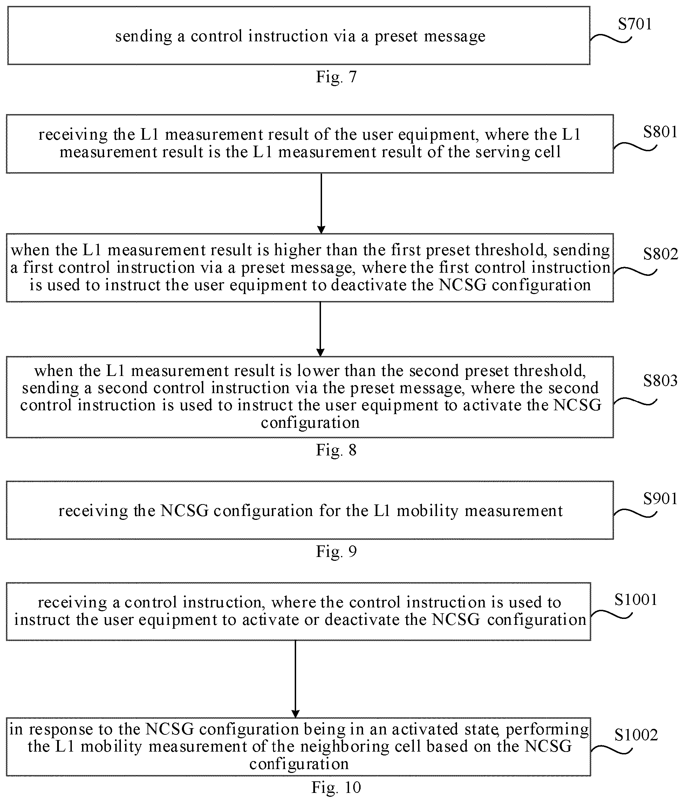

Fig. 7 is a flow chart of a cell measurement method according to an example embodiment. The cell measurement method may be applied to the network device shown in Fig. 1, for example. Referring to Fig. 7, step S601 shown in Fig. 6 may be implemented by the following step(s):
S701, sending a control instruction via a preset message.

The explanation of the control instruction may refer to the above-mentioned related embodiments, and the present embodiment will not be repeated here.

As an example, the preset message may be one or more of a Radio Resource Control (RRC) message, a Media Access Control Control Element (MAC CE, MAC-Control Element) message, and Downlink Control Information (DCI).

In the above way, the network device controls the user equipment to activate or deactivate the NCSG configuration through the control instruction sent via the preset message, so that the NCSG configuration is in an activated state or an inactivated state, thereby realizing the control about whether the user equipment can perform L1 measurement based on the NCSG configuration.

Fig. 8 is a flow chart of a cell measurement method according to an example embodiment. The cell measurement method may be applied for example to the network device shown in Fig. 1. With reference to Fig. 8, step S701 shown in Fig. 7 may be implemented by the following steps S801, S802, and S803.

S801, receiving the L1 measurement result of the user equipment, where the L1 measurement result is the L1 measurement result of the serving cell.

As an example, the L1 measurement result may be, for example, indicators such as L1-Reference Signal Received Power (L1-RSRP) and/or L1-Signal to Interference plus Noise Ratio (L1-SINR). For example, in some embodiments, the L1 measurement result is L1-RSRP; in some embodiments, the L1 measurement result is L1-SINR; and in some embodiments, the L1 measurement result is L1-RSRP and L1-SINR.

S802, when the L1 measurement result is higher than the first preset threshold, sending a first control instruction via a preset message, where the first control instruction is used to instruct the user equipment to deactivate the NCSG configuration.

As an example, when the L1 measurement result is L1-RSRP and L1-RSRP is higher than the corresponding first preset threshold, the first control instruction is sent via the preset message.

As an example, when the L1 measurement result is L1-SINR and L1-SINR is higher than the corresponding first preset threshold, the first control instruction is sent via the preset message.

As an example, when the L1 measurement result is L1-RSRP and L1-SINR, L1-RSRP is higher than the corresponding first preset threshold, and L1-SINR is higher than the corresponding first preset threshold, the first control instruction is sent via the preset message.

It is worth noting that the first preset thresholds as mentioned in L1-RSRP being higher than the corresponding first preset threshold and L1-SINR being higher than the corresponding first preset threshold may be the same or different.

S803, when the L1 measurement result is lower than the second preset threshold, sending a second control instruction via the preset message, where the second control instruction is used to instruct the user equipment to activate the NCSG configuration.

As an example, when the L1 measurement result is L1-RSRP and L1-RSRP is lower than the corresponding second preset threshold, the second control instruction is sent via the preset message.

As an example, when the L1 measurement result is L1-SINR and L1-SINR is lower than the corresponding second preset threshold, the second control instruction is sent via the preset message.

As an example, when the L1 measurement result is L1-RSRP and L1-SINR, L1-RSRP is lower than the corresponding second preset threshold, and L1-SINR is lower than the corresponding second preset threshold, the second control instruction is sent via the preset message.

It is worth noting that the second preset thresholds as mentioned in L1-RSRP being lower than the corresponding second preset threshold and L1-SINR being lower than the corresponding second preset threshold may be the same or different. The explanation of the preset message may refer to the above-mentioned relevant embodiments, and the present embodiment will not be repeated here.

The first preset threshold and the second preset threshold are different. The first preset threshold is greater than the second preset threshold. The first preset threshold and the second preset threshold may be any preset values. For example, they may be values agreed upon by the protocol.

It should be noted that when the L1 measurement result is higher than the first preset threshold, it indicates that the communication quality of the serving cell is good and will not trigger the mobility management of the user equipment. Therefore, there is no need to perform the L1 measurement of the neighboring cell, and then the NCSG configuration can be deactivated to avoid the power consumption required for the user equipment to perform the L1 measurement. When the L1 measurement result is lower than the second preset threshold, it indicates that the communication quality of the serving cell is poor and will trigger the mobility management of the user equipment. Therefore, it is necessary to perform the L1 measurement of the neighboring cell, and then the NCSG configuration can be activated, so that the user equipment can perform the L1 measurement to achieve cell switching of the user equipment according to the L1 measurement result.

In this way, the network device can refer to the L1 measurement result of the serving cell to determine the corresponding control instruction and send it to the user equipment, so that the NCSG configuration is in an activated state or an inactivated state. Thus, the user equipment can determine whether to perform the L1 measurement based on the deactivated state or the activated state of the NCSG configuration.

Fig. 9 is a flowchart of a cell measurement method according to an example embodiment, which may be applied for example to the user equipment shown in Fig. 1. With reference to Fig. 9, the method may include the following steps S901 and S902.

S901, receiving the NCSG configuration for the L1 mobility measurement.

It is worth noting that the NCSG configuration received by the user equipment may be sent directly to the user equipment by the network device, and the NCSG configuration received by the user equipment may also be sent to the user equipment by the network device through other network devices and/or other user equipment. The examples of other user equipment and/or other network devices may refer to the examples of network device and user equipment in Fig. 1 above, and the present embodiment will not be repeated here.

The explanation of the NCSG configuration may refer to the above-mentioned related embodiments, and the present embodiment will not be repeated here.

S902, performing the L1 mobility measurement of the neighboring cell based on the NCSG configuration.

As an example, the neighboring cell may be one or more. The user equipment may receive the cell identifier(s) of one or more measurement objects, and the cell identifier of the measurement object is used to indicate the corresponding neighboring cell. The network device may send the cell identifier of the measurement object to the user equipment, so that the user terminal performs the L1 mobility measurement of the neighboring cell corresponding to the cell identifier according to the cell identifier of the measurement object.

In the above way, the measurement configuration of the L1 mobility measurement of the neighboring cell is implemented through the NCSG configuration, and the user equipment receives the NCSG configuration for the L1 mobility measurement, and performs the L1 mobility measurement of the neighboring cell based on the NCSG configuration, thereby realizing the L1 mobility measurement of the neighboring cell of the user equipment. In addition, since the ML time period in the NCSG configuration does not have an interruption effect on the service, the user equipment performs the L1 mobility measurement of the neighboring cell based on the NCSG configuration, which can reduce the interruption time of the service.

In some embodiments, the NCSG configuration may be sent through a radio resource control message.

The explanation of the NCSG configuration may refer to the above-mentioned related embodiments, and the present embodiment will not be repeated here.

In the above way, the NCSG configuration is sent by using the Radio Resource Control (RRC) message to carry the NCSG configuration.

In some embodiments, the NCSG configuration is configured to instruct the user equipment to perform the NCSG configuration configured for the L3 mobility measurement. That is, the NCSG configuration for the L1 measurement can be the shared NCSG configuration for the L3 mobility measurement, so that the configuration of network device can be reduced.

In some embodiments, the NCSG configuration for the L1 mobility measurement may be dedicated to the L1 measurement or shared with the L3 measurement. For example, the network device may indicate whether the user equipment can use the NCSG configuration configured for the L3 measurement through a control message. When the control message indicates that the user equipment can use the NCSG configuration configured for the L3 measurement, and the user equipment needs to perform the L1 measurement, the NCSG configuration configured for the L3 measurement can be directly used, without the need for the network device to re-send the NCSG configuration for the L1 measurement, thereby reducing resource loss.

In some embodiments, the method further includes: reporting, by the user equipment, the terminal capability information of the user equipment.

The terminal capability information is used to indicate whether the user equipment supports at least the L1 mobility measurement of the neighboring cell based on the NCSG configuration. The NCSG configuration is sent through a radio resource control message when the terminal capability information indicates that the user equipment supports at least the L1 mobility measurement of the neighboring cell based on the NCSG configuration.

The explanation of the NCSG configuration may refer to the above-mentioned related embodiments, and the present embodiment will not be repeated here.

As an example, the terminal capability information reported by the user equipment may be sent directly to the network device, or forwarded to the network device through other devices, where the other devices are, for example, other user equipment and/or other network devices. With regard to examples of other user equipment and/or other network devices, reference may be made to the examples of network device and user equipment in Fig. 1 above, and the present embodiment will not be described in detail here.

It is worth noting that when the user equipment does not support the L1 mobility measurement of the neighboring cell based on the NCSG configuration, even if the NCSG configuration is sent to the user equipment, the user equipment cannot complete the L1 mobility measurement of the neighboring cell.

Therefore, when the user equipment supports the L1 mobility measurement of the neighboring cell based on the NCSG configuration, it is determined to send the NCSG configuration for the L1 mobility measurement through the radio resource control message, so that the situation is avoided where the NCSG configuration for the L1 mobility measurement is still sent when the user equipment does not support the L1 mobility measurement of the neighboring cell based on the NCSG configuration, thereby avoiding the waste of resources.

In some embodiments, the terminal capability information reported by the user equipment indicates the support of the L1 mobility measurement of the neighboring cell based on the NCSG configuration and the support of the L3 mobility measurement based on the NCSG configuration. In this case, the NCSG configuration may be the NCSG configuration configured to instruct the user equipment to perform the L3 mobility measurement, or the NCSG configuration may be the NCSG configuration dedicated to the user equipment to perform the L1 mobility measurement by the network device.

The explanation of the NCSG configuration may refer to the above-mentioned related embodiments, and the present embodiment will not be described in detail here.

The NCSG configuration may be sent via a radio resource control message.

In the above way, when it is determined that the user equipment has the capability of L1 measurement and L3 measurement, the user equipment may share the NCSG configuration for the L3 measurement to perform the L1 measurement. Thus, the resources required for the network device to reconfigure the NCSG configuration can be reduced. The network device may also configure the NCSG configuration dedicated to the user equipment to perform the L1 mobility measurement.

Fig. 10 is a flow chart of a cell measurement method according to an example embodiment, which may be applied to the user equipment shown in Fig. 1, and may include the following steps S1001 and S1002 with reference to Fig. 10.

S1001, receiving a control instruction, where the control instruction is used to instruct the user equipment to activate or deactivate the NCSG configuration.

The explanation of the NCSG configuration may refer to the above-mentioned relevant embodiments, and the present embodiment is not repeated here.

As an example, the control instruction may be sent directly by the network device to the user equipment, or forwarded by the network device to the user equipment through other devices. The other devices here are, for example, other user equipment and/or other network devices. With regard to examples of other user equipment and/or other network devices, reference may be made to the examples of network devices and user equipment in Fig. 1 above, and the present embodiment is not repeated here.

For example, the control instruction may include a first control instruction and a second control instruction. The first control instruction is used to instruct the user equipment to deactivate the NCSG configuration. The second control instruction is used to instruct the user equipment to activate the NCSG configuration.

It is worth noting that after the user equipment receives the first control instruction to deactivate the NCSG configuration, the NCSG configuration is in a deactivated state; and after the user equipment receives the second control instruction to activate the NCSG configuration, the NCSG configuration is in an activated state.

For example, the control instructions instructing the user equipment to deactivate the NCSG configuration and activate the NCSG configuration may be indicated by the same message. Specifically, activation and deactivation of the NCSG configuration may be indicated by using fields, for example:

| | | |
|---|---|---|
| necsgstate-r18 | ENUMERATED {true} | OPTIONAL Need R |

where ncsgstate-r18 is used to represent the message describing the control instruction, ENUMERATED {true} is used to represent the field indicating the activation of the NCSG configuration, and OPTIONAL represents that the configuration of this message is optional. It is worth noting that if the control message is not configured, it indicates the deactivation of the NCSG configuration.

For example, the control instructions instructing the user equipment to deactivate the NCSG configuration and activate the NCSG configuration may be indicated by the same message. Specifically, activation and deactivation of the NCSG configuration may be indicated by a Boolean variable:

| | | |
|---|---|---|
| necsgstate-r18 | BOOLEAN | OPTIONAL Need R |

where ncsgstate-r18 is used to represent the message describing the control instruction, and BOOLEAN is used to represent activation and deactivation of the NCSG configuration. If the field is 'true', it indicates that the NCSG configuration is activated. If the field is 'false', it indicates that the NCSG configuration is deactivated. OPTIONAL indicates that the configuration of this message is optional.

S1002, in response to the NCSG configuration being in an activated state, performing the L1 mobility measurement of the neighboring cell based on the NCSG configuration.

It is worth noting that step S1002 may be an implementation of step S902.

In the above way, the control instruction sent by the network device is used to control the user equipment to activate or deactivate the NCSG configuration, so that the NCSG configuration is in an activated state or an inactivated state, thereby realizing the L1 measurement of the user equipment based on the NCSG configuration when the NCSG configuration is in an activated state.

In some embodiments, the control instruction may be sent via a preset message.

As an example, the preset message may be one or more of a Radio Resource Control (RRC) message, a Media Access Control Control Element (MAC CE, MAC-Control Element) message, and Downlink Control Information (DCI).

In some embodiments, the method further includes: sending, by the user equipment, the L1 measurement result of the user equipment.

The L1 measurement result is the L1 measurement result of the serving cell.

As an example, the L1 measurement result may be, for example, an indicator such as L1-RSRP and/or L1-SINR. For example, in some embodiments, the L1 measurement result is L1-RSRP; in some embodiments, the L1 measurement result is L1-SINR; and in some embodiments, the L1 measurement result is L1-RSRP and L1-SINR.

The L1 measurement result may be used to assist the network device in sending a first control instruction when the L1 measurement result is higher than a first preset threshold. The first control instruction is used to instruct the user equipment to deactivate the NCSG configuration.

As an example, when the L1 measurement result is L1-RSRP and L1-RSRP is higher than the corresponding first preset threshold, the first control instruction is sent via a preset message.

As an example, when the L1 measurement result is L1-SINR, and L1-SINR is higher than the corresponding first preset threshold, the first control instruction is sent via a preset message.

As an example, when the L1 measurement result is L1-RSRP and L1-SINR, L1-RSRP is higher than the corresponding first preset threshold, and L1-SINR is higher than the corresponding first preset threshold, the first control instruction is sent via a preset message.

It is worth noting that the first preset thresholds as mentioned in L1-RSRP being higher than the corresponding first preset threshold and L1-SINR being higher than the corresponding first preset threshold may be the same or different.

The L1 measurement result may be used to assist the network device in sending a second control instruction when the L1 measurement result is lower than the second preset threshold. The second control instruction is used to instruct the user equipment to activate the NCSG configuration. The first preset threshold is greater than the second preset threshold.

As an example, when the L1 measurement result is L1-RSRP, and L1-RSRP is lower than the corresponding second preset threshold, the second control instruction is sent via a preset message.

As an example, when the L1 measurement result is L1-SINR, and L1-SINR is lower than the corresponding second preset threshold, the second control instruction is sent via a preset message.

As an example, when the L1 measurement results are L1-RSRP and L1-SINR, L1-RSRP is lower than the corresponding second preset threshold, and L1-SINR is lower than the corresponding second preset threshold, the second control instruction is sent via a preset message.

It is worth noting that the second preset thresholds as mentioned in L1-RSRP being lower than the corresponding second preset threshold and L1-SINR being lower than the corresponding second preset threshold may be the same or different. The first preset threshold and the second preset threshold are different. The first preset threshold is greater than the second preset threshold. The first preset threshold and the second preset threshold may be any preset values. For example, they may be values agreed upon by the protocol.

It should be noted that, when the L1 measurement result is higher than the first preset threshold, it indicates that the communication quality of the serving cell is good and will not trigger the mobility management of the user equipment. Therefore, there is no need to perform the L1 measurement of the neighboring cell, and then the NCSG configuration can be deactivated, so as to avoid the power consumption required for the user equipment to perform the L1 measurement. When the L1 measurement result is lower than the second preset threshold, it indicates that the communication quality of the serving cell is poor and will trigger the mobility management of the user equipment. Therefore, it is necessary to perform the L1 measurement of the neighboring cell, and then the NCSG configuration can be activated, so that the user equipment can perform the L1 measurement to achieve cell switching of the user equipment according to the L1 measurement result.

In this way, the network device can refer to the L1 measurement result of the serving cell to determine the corresponding control instruction and send it to the user equipment, so that the NCSG configuration is in an activated state or an inactivated state. Thus, the user equipment can determine whether to perform the L1 measurement based on the deactivated state or activated state of the NCSG configuration.

In some embodiments, the method further includes: deactivating the NCSG configuration by the user equipment after the serving cell changes.

The explanation of the NCSG configuration may refer to the above-mentioned relevant embodiments, and the present embodiment is not repeated here.

It is worth noting that after the serving cell of the user equipment changes, the user equipment may automatically deactivate the relevant NCSG configuration. Subsequently, the network device may reactivate the NCSG configuration through RRC, MAC CE, or DCI, so that the user equipment can re-use the NCSG configuration to perform the L1 measurement of the neighboring cell.

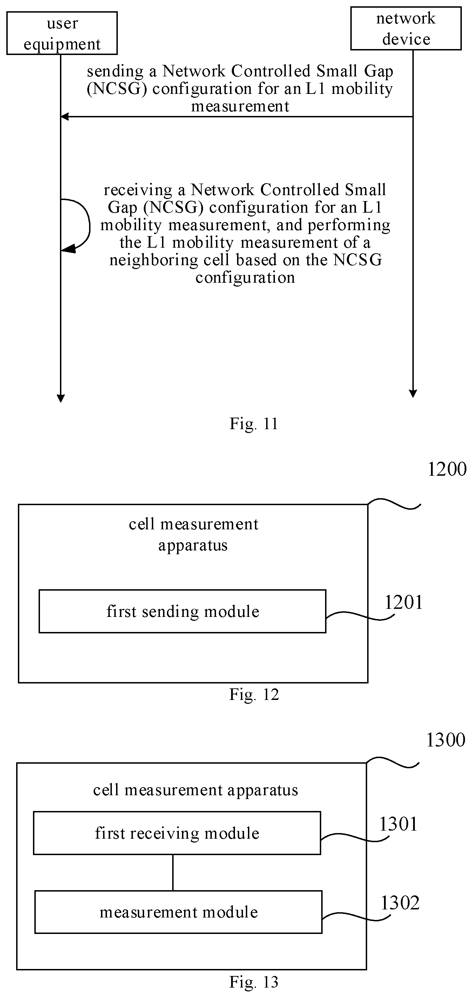

Fig. 11 is a flow chart of a cell measurement method according to an example embodiment, which may be applied to the communication system shown in Fig. 1, for example. Referring to Fig. 11, the network device sends the NCSG configuration for the L1 mobility measurement to the user equipment, and the user equipment receives the NCSG configuration for the L1 mobility measurement. Based on the NCSG configuration, the L1 mobility measurement of the neighboring cell is performed.

In the above way, the network device sends the NCSG configuration for the L1 mobility measurement, and the NCSG configuration is used to instruct the user equipment to perform the L1 mobility measurement of the neighboring cell. The measurement configuration of the L1 mobility measurement of the neighboring cell is implemented through the NCSG configuration, thereby realizing the L1 mobility measurement of the neighboring cell of the user equipment. In addition, since the ML time period in the NCSG configuration does not have an interruption effect on the service, the user equipment performs the L1 mobility measurement of the neighboring cell based on the NCSG configuration, which can reduce the interruption time of the service.

In some embodiments, (1) the network device sends the NCSG configuration for the L1 mobility measurement through an RRC message, where the NCSG configuration may be dedicated to the L1 measurement or shared with the L3 measurement. Further, the NCSG configuration for the L1 mobility measurement sent by the network may be based on the terminal capability information reported by the User Equipment (UE). The NCSG configuration, the terminal capability information, etc. here may refer to the above-mentioned related embodiments, and the present embodiment will not be repeated here.
(2) In view of (1), after the UE receives the NCSG configuration for the L1 mobility measurement sent by the network device, it performs the L1 measurement of the neighboring cell with the required measurement interval based on the NCSG configuration. The UE needs to perform the mobility measurement on one or more Measurement Objects (MOs) configured by the network device (MO corresponds to the measurement signal of the neighboring cell and signals of other carriers), and report the measurement results to the network device, so that the network device can determine the current communication status of the UE and then perform mobility management on the UE. Due to the manufacturing cost and shape, the terminal can only work at a single frequency at a single time moment, and the terminal can only measure the MO centered on this frequency at this time moment. The terminal can easily measure the signal of the neighboring cell with the same frequency as the current working frequency, and receive and send data in the serving cell at the same time. When measuring different frequencies (e.g., neighboring cells with different frequencies) and other systems (e.g., other wireless networks with 5G NR frequencies), the communication with the serving cell (TX/RX) must be suspended, and the RF module needs to be adjusted for frequency configuration. After a period of time, the connection with the serving cell is restored. The time interval during which the UE suspends communication with the serving cell to measure inter-frequency neighboring cells or other wireless neighboring cells is called the measurement gap (Meas Gap). Generally speaking, the network device will configure a plurality of MOs for the UE, among which there may be multiple MOs that need to be measured based on the measurement gap. That is, there may be multiple MOs competing for the gap. At this time, the UE needs to determine the scaling factor of each MO to determine the corresponding measurement requirements, such as the measurement gap in time domain. Therefore, combined with the above explanation of the NCSG configuration, the NCSG configuration is used here to perform the L1 measurement. Compared with the UE that requires the measurement gap, the interruption time caused by the NCSG configuration to the UE's serving cell will be shorter.
(3) In view of (1), the network device may control the activation state and the deactivation state of the NCSG configuration through RRC messages, MAC CE messages, or DCI commands. Only when the NCSG configuration is in the activated state can the UE perform the relevant L1 measurement based on the NCSG configuration. The activation state and the deactivation state of the NCSG configuration can be controlled by carrying the control instruction in RRC messages, MAC CE messages, or DCI commands. With regard to the explanation of the control instructions controlling the activation state and the deactivation state of the NCSG configuration, reference may be made to the above-mentioned related embodiments, and the present embodiment will not be repeated here.
(4) In view of (3), the deactivation indication of the network device may be based on the first condition of the configuration, such as:
   ① After the UE's serving cell changes, the network device may send a deactivation indication.
   ② The L1 measurement result of the UE's serving cell is higher than the first preset threshold, and the network device may send a deactivation indication.

The deactivation indication here is, for example, the first control instruction mentioned above. The explanations of the first control instruction and the first preset threshold may refer to the above-mentioned related embodiments, and the present embodiment will not be repeated here.

(5) In view of (3), the activation indication of the network device may be based on the second condition of the configuration, such as:
① When the L1 measurement result of the UE's serving cell is lower than the second preset threshold, the network device may send an activation indication.

The activation indication here is, for example, the second control instruction mentioned above. The explanations of the second control instruction and the second preset threshold value may refer to the above-mentioned related embodiments, and the present embodiment will not be repeated here.

Fig. 12 is a block diagram of a cell measurement apparatus according to an example embodiment. The cell measurement apparatus may be applied to a network device. Referring to Fig. 12, the cell measurement apparatus 1200 includes a first sending module 1201.

The first sending module 1201 is configured to send a Network Controlled Small Gap (NCSG) configuration for an L1 mobility measurement, where the NCSG configuration is used to instruct the user equipment to perform the L1 mobility measurement of the neighboring cell.

In some embodiments, the first sending module 1201 is specifically configured to send the NCSG configuration for the L1 mobility measurement through a radio resource control message.

In some embodiments, the NCSG configuration is the NCSG configuration configured to instruct the user equipment to perform the L3 mobility measurement.

In some embodiments, the first sending module 1201 is specifically configured to:
receive the terminal capability information reported by the user equipment, where the terminal capability information is used to indicate whether the user equipment supports at least the L1 mobility measurement of the neighboring cell based on the NCSG configuration; and
when the terminal capability information indicates that the user equipment supports at least the L1 mobility measurement of the neighboring cell based on the NCSG configuration, determine to send the NCSG configuration for the L1 mobility measurement through a radio resource control message.

In some embodiments, the cell measurement apparatus 1200 further includes:
a second sending module, configured to send a control instruction, where the control instruction is used to instruct the user equipment to activate or deactivate the NCSG configuration, and when the NCSG configuration is in an activated state, the user equipment can perform the L1 mobility measurement of the neighboring cell based on the NCSG configuration.

In some embodiments, the second sending module is specifically configured to:
send the control instruction via a preset message, where the preset message includes at least one of a radio resource control message, a media access control control element message, and a downlink control information.

In some embodiments, the second sending module is specifically configured to:
receive the L1 measurement result of the user equipment, where the L1 measurement result is the L1 measurement result of the serving cell;
when the L1 measurement result is higher than the first preset threshold, send a first control instruction via a preset message, where the first control instruction is used to instruct the user equipment to deactivate the NCSG configuration; and
when the L1 measurement result is lower than the second preset threshold, send a second control instruction via a preset message, where the second control instruction is used to instruct the user equipment to activate the NCSG configuration, and the first preset threshold is greater than the second preset threshold.

The implementation of each module in the above-mentioned apparatus may refer to the above-mentioned related embodiments, and the present embodiment is not repeated here.

Fig. 13 is a block diagram of a cell measurement apparatus according to an example embodiment, and the cell measurement apparatus may be applied to a user equipment. Referring to Fig. 13, the cell measurement apparatus 1300 includes: a first receiving module 1301, configured to receive a Network Controlled Small Gap (NCSG) configuration for an L1 mobility measurement; and
a measurement module 1302, configured to perform the L1 mobility measurement of a neighboring cell based on the NCSG configuration.

In some embodiments, the NCSG configuration is sent via a radio resource control message.

In some embodiments, the NCSG configuration is the NCSG configuration configured to instruct the user equipment to perform the L3 mobility measurement.

In some embodiments, the cell measurement apparatus 1300 further includes:
a reporting module, configured to report the terminal capability information of the user equipment.

The terminal capability information is used to indicate whether the user equipment supports at least the L1 mobility measurement of the neighboring cell based on the NCSG configuration. The NCSG configuration is sent through a radio resource control message when the terminal capability information indicates that the user equipment at least supports the L1 mobility measurement of the neighboring cell based on the NCSG configuration.

In some embodiments, the cell measurement apparatus 1300 further includes:
a second receiving module, configured to receive a control instruction, where the control instruction is used to instruct the user equipment to activate the NCSG configuration or deactivate the NCSG configuration.

The measurement module 1302 is specifically configured to perform the L1 mobility measurement of the neighboring cell based on the NCSG configuration in response to the NCSG configuration being in an activated state.

In some embodiments, the control instruction is sent via a preset message, and the preset message includes at least one of a radio resource control message, a media access control control element message, and downlink control information.

In some embodiments, the cell measurement apparatus 1300 further includes:
a third sending module, configured to send the L1 measurement result of the user equipment, where the L1 measurement result is the L1 measurement result of the serving cell.

The L1 measurement result is used to assist the network device to send a first control instruction when the L1 measurement result is higher than a first preset threshold. The first control instruction is used to instruct the user equipment to deactivate the NCSG configuration. The L1 measurement result is used to assist the network device to send a second control instruction when the L1 measurement result is lower than a second preset threshold. The second control instruction is used to instruct the user equipment to activate the NCSG configuration. The first preset threshold is greater than the second preset threshold.

In some embodiments, the cell measurement apparatus 1300 further includes:
an activation module, configured to deactivate the NCSG configuration after the serving cell changes.

The implementation of each module in the above apparatus may refer to the above related embodiments, and the present embodiment is not repeated here.

The present disclosure provides a cell measurement device, including:
a processor; and
a memory for storing processor-executable instructions.

The processor is configured to perform the steps of the above cell measurement method.

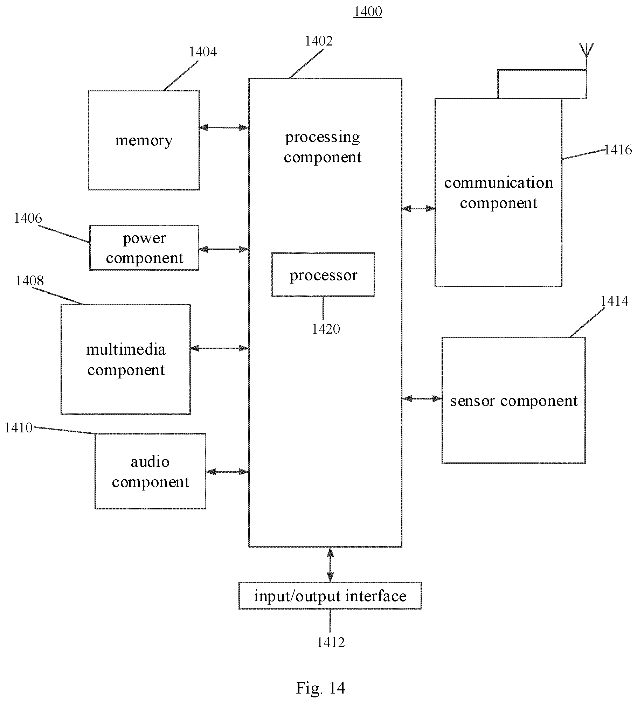

Fig. 14 is a block diagram of a cell measurement device according to an example embodiment. The cell measurement device may be the above-mentioned user equipment, a mobile phone, a computer, a digital broadcast terminal, a messaging device, a game console, a tablet device, a medical device, a fitness device, a personal digital assistant, etc.

Referring to Fig. 14, the cell measurement device 1400 may include one or more of the following components: a processing component 1402, a memory 1404, a power component 1406, a multimedia component 1408, an audio component 1410, an input/output interface 1412, a sensor component 1414, and a communication component 1416.

The processing component 1402 generally controls the overall operation of the cell measurement device 1400, such as operations associated with display, phone calls, data communications, camera operations, and recording operations. The processing component 1402 may include one or more processors 1420 to execute instructions to complete all or some of the steps of the cell measurement method. In addition, the processing component 1402 may include one or more modules to facilitate interaction between the processing component 1402 and other components. For example, the processing component 1402 may include a multimedia module to facilitate interaction between the multimedia component 1408 and the processing component 1402.

The memory 1404 is configured to store various types of data to support the operation of the cell measurement device 1400. Examples of such data include instructions for any application or method operating on the cell measurement device 1400, contact data, phone book data, messages, pictures, videos, etc. The memory 1404 may be implemented by any type of volatile or non-volatile storage device or a combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, magnetic disk, or optical disk.

The power component 1406 provides power to various components of the cell measurement device 1400. The power component 1406 may include a power management system, one or more power supplies, and other components associated with generating, managing, and distributing power for the cell measurement device 1400.

The multimedia component 1408 includes a screen that provides an output interface between the cell measurement device 1400 and the user. In some embodiments, the screen may include a Liquid Crystal Display (LCD) and a Touch Panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundary of the touch or slide action, but also detect the duration and pressure associated with the touch or slide operation. In some embodiments, the multimedia component 1408 includes a front camera and/or a rear camera. When the cell measurement device 1400 is in an operation mode, such as a shooting mode or a video mode, the front camera and/or the rear camera may receive external multimedia data. Each of the front camera and the rear camera may be a fixed optical lens system or have a focal length and optical zoom capability.

The audio component 1410 is configured to output and/or input audio signals. For example, the audio component 1410 includes a microphone (MIC), which is configured to receive external audio signals when the cell measurement device 1400 is in an operation mode, such as a call mode, a recording mode, and a voice recognition mode. The received audio signal may be further stored in the memory 1404 or sent via the communication component 1416. In some embodiments, the audio component 1410 also includes a speaker for outputting audio signals.

The input/output interface 1412 provides an interface between the processing component 1402 and the peripheral interface module, which may be a keyboard, a click wheel, a button, etc. These buttons may include, but are not limited to: a home button, a volume button, a start button, and a lock button.

The sensor component 1414 includes one or more sensors for providing various aspects of status evaluation for the cell measurement device 1400. For example, the sensor assembly 1414 may detect the on/off state of the cell measurement device 1400, the relative positioning of components (such as the display and keypad of the device 1400). The sensor assembly 1414 may also detect the position change of the cell measurement device 1400 or of a component of the cell measurement device 1400, the presence or absence of user contact with the cell measurement device 1400, the orientation or acceleration/deceleration of the cell measurement device 1400, and the temperature change of the cell measurement device 1400. The sensor assembly 1414 may include a proximity sensor configured to detect the presence of a nearby object without any physical contact. The sensor assembly 1414 may also include an optical sensor, such as a CMOS or CCD image sensor, for use in imaging applications. In some embodiments, the sensor assembly 1414 may also include an accelerometer, a gyroscope sensor, a magnetic sensor, a pressure sensor, or a temperature sensor.

The communication component 1416 is configured to facilitate wired or wireless communication between the cell measurement device 1400 and other devices. The cell measurement device 1400 may access a wireless network based on a communication standard, such as WiFi, 2G, or 3G, or a combination thereof. In an example embodiment, the communication component 1416 receives a broadcast signal or broadcast-related information from an external broadcast management system via a broadcast channel. In an example embodiment, the communication component 1416 also includes a Near Field Communication (NFC) module to facilitate short-range communication. For example, the NFC module may be implemented based on Radio Frequency Identification (RFID) technology, Infrared Data Association (IrDA) technology, Ultra-WideBand (UWB) technology, BlueTooth (BT) technology, and other technologies.

In an example embodiment, the cell measurement device 1400 may be implemented by one or more Application-Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors, or other electronic components to implement the cell measurement method.

In an example embodiment, a non-transitory computer-readable storage medium including instructions is also provided, such as a memory 1404 including instructions. The instructions may be executed by a processor 1420 of a cell measurement device 1400 to complete the cell measurement method. For example, the non-transitory computer-readable storage medium may be a ROM, a Random Access Memory (RAM), a CD-ROM, a tape, a floppy disk, and an optical data storage device.

In addition to being an independent user equipment, the cell measurement device 1400 may also be a part of an independent user equipment. For example, in an embodiment, the device may be an Integrated Circuit (IC) or a chip. The integrated circuit may be an IC or a collection of multiple ICs. The chip may include but is not limited to the following types: Graphics Processing Unit (GPU), Central Processing Unit (CPU), Field Programmable Gate Array (FPGA), Digital Signal Processor (DSP), Application Specific Integrated Circuit (ASIC), System on Chip (SoC), etc. The above-mentioned integrated circuit or chip may be used to execute executable instructions (or codes) to implement the above-mentioned cell measurement method. The executable instructions may be stored in the integrated circuit or chip, or may be obtained from other devices or equipment. For example, the integrated circuit or chip includes a processor, a memory, and an interface for communicating with other devices. The executable instructions may be stored in the processor. When the executable instructions are executed by the processor, the above-mentioned cell measurement method is implemented. Alternatively, the integrated circuit or chip may receive executable instructions through the interface and transmit them to the processor for execution to implement the above-mentioned cell measurement method.

In another example embodiment, a computer program product is also provided, which includes a computer program that can be executed by a programmable device. The computer program has a code portion for implementing the above-mentioned cell measurement method when executed by the programmable device.

In another example embodiment, a chip is also provided, including a processor and an interface. The processor is used to read instructions to perform the above-mentioned cell measurement method.

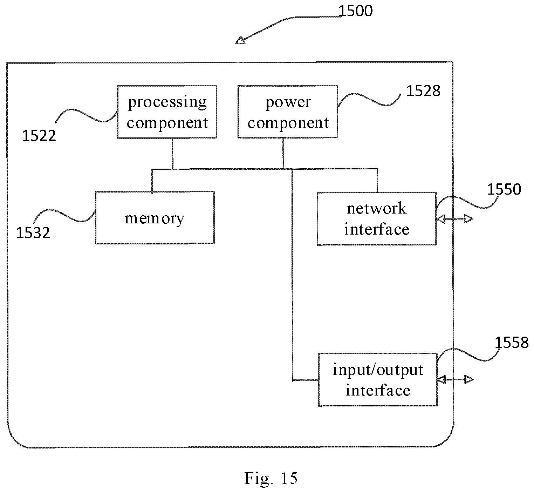

Fig. 15 is a block diagram of a cell measurement device shown according to an example embodiment. The cell measurement device 1500 may be the above-mentioned network device. With reference to Fig, 15, the cell measurement device 1500 includes a processing component 1522, which further includes one or more processors, and a memory resource represented by a memory 1532 for storing instructions executable by the processing component 1522, such as an application. The application stored in the memory 1532 may include one or more modules each corresponding to a set of instructions. In addition, the processing component 1522 is configured to execute instructions to perform the above-mentioned cell measurement method.

The cell measurement device 1500 may also include a power component 1528 configured to perform power management of the cell measurement device 1500, a wired or wireless network interface 1550 configured to connect the cell measurement device 1500 to a network, and an input/output interface 1558.

In an example embodiment, a non-transitory computer-readable storage medium including instructions is also provided, such as a memory 1532 including instructions. The above-mentioned instructions may be executed by the processing component 1522 of the cell measurement device 1500 to complete the above-mentioned cell measurement method. For example, the non-temporary computer-readable storage medium may be a ROM, a Random Access Memory (RAM), a CD-ROM, a magnetic tape, a floppy disk, and an optical data storage device, etc.

After considering the specification and practicing the present disclosure, it will be easy for a person skilled in the art to think of other embodiments of the present disclosure. The present disclosure is intended to cover any variation, use, or adaptation of the present disclosure, which follows the general principles of the present disclosure and includes common knowledge or customary technical means in the technical field that are not disclosed in the present disclosure. The description and embodiments are to be regarded as examples only, and the true scope and spirit of the present disclosure are indicated by the following claims.

It should be understood that the present disclosure is not limited to the precise structure(s) described above and shown in the drawings, and various modifications and changes may be made without departing from its scope. The scope of the present disclosure is limited only by the appended claims.

## Claims

1. A cell measurement method, applied to a network device and comprising:
sending a Network Controlled Small Gap (NCSG) configuration for an L1 mobility measurement, wherein the NCSG configuration is used to instruct a user equipment to perform the L1 mobility measurement of a neighboring cell.

2. The method according to claim 1, wherein the sending the NCSG configuration for the L1 mobility measurement comprises:
sending the NCSG configuration for the L1 mobility measurement through a radio resource control message.

3. The method according to claim 1, wherein the NCSG configuration is a NCSG configuration configured to instruct the user equipment to perform an L3 mobility measurement.

4. The method according to claim 2, wherein the sending the NCSG configuration for the L1 mobility measurement through the radio resource control message comprises:
receiving terminal capability information reported by the user equipment, wherein the terminal capability information is used to indicate whether the user equipment supports at least the L1 mobility measurement of the neighboring cell based on the NCSG configuration; and
in response to the terminal capability information indicating that the user equipment supports at least the L1 mobility measurement of the neighboring cell based on the NCSG configuration, determining to send the NCSG configuration for the L1 mobility measurement through the radio resource control message.

5. The method according to claim 1, further comprising:
sending a control instruction, wherein the control instruction is used to instruct the user equipment to activate or deactivate the NCSG configuration, wherein in a case that the NCSG configuration is in an activated state, the user equipment is capable of performing the L1 mobility measurement of the neighboring cell based on the NCSG configuration.

6. The method according to claim 5, wherein the sending the control instruction comprises:
sending the control instruction via a preset message, wherein the preset message comprises at least one of: a radio resource control message, a media access control control element message, or downlink control information.

7. The method according to claim 6, wherein the sending the control instruction via the preset message comprises:
receiving an L1 measurement result of the user equipment, wherein the L1 measurement result is an L1 measurement result of a serving cell;
in response to the L1 measurement result being higher than a first preset threshold, sending a first control instruction via the preset message, wherein the first control instruction is used to instruct the user equipment to deactivate the NCSG configuration; and
in response to the L1 measurement result being lower than a second preset threshold, sending a second control instruction via the preset message, wherein the second control instruction is used to instruct the user equipment to activate the NCSG configuration, and the first preset threshold is greater than the second preset threshold.

8. A cell measurement method, applied to a user equipment and comprising:
receiving a Network Controlled Small Gap (NCSG) configuration for an L1 mobility measurement; and
performing the L1 mobility measurement of a neighboring cell based on the NCSG configuration.

9. The method according to claim 8, wherein the NCSG configuration is sent through a radio resource control message.

10. The method according to claim 8, wherein the NCSG configuration is a NCSG configuration configured to instruct the user equipment to perform an L3 mobility measurement.

11. The method according to claim 9, further comprising:
reporting terminal capability information of the user equipment, wherein
the terminal capability information is used to indicate whether the user equipment supports at least the L1 mobility measurement of the neighboring cell based on the NCSG configuration, and
the NCSG configuration is sent through the radio resource control message in response to the terminal capability information indicating that the user equipment supports at least the L1 mobility measurement of the neighboring cell based on the NCSG configuration.

12. The method according to claim 8, further comprising:
receiving a control instruction, wherein the control instruction is used to instruct the user equipment to activate or deactivate the NCSG configuration, wherein
the performing the L1 mobility measurement of the neighboring cell based on the NCSG configuration comprises:
in response to the NCSG configuration being in an activated state, performing the L1 mobility measurement of the neighboring cell based on the NCSG configuration.

13. The method according to claim 12, wherein
the control instruction is sent via a preset message, and
the preset message comprises at least one of: a radio resource control message, a media access control control element message, or downlink control information.

14. The method according to claim 12, further comprising:
sending an L1 measurement result of the user equipment, wherein the L1 measurement result is an L1 measurement result of a serving cell, wherein
the L1 measurement result is used to assist a network device to send a first control instruction in response to the L1 measurement result being higher than a first preset threshold, wherein the first control instruction is used to instruct the user equipment to deactivate the NCSG configuration, and
the L1 measurement result is further used to assist the network device to send a second control instruction in response to the L1 measurement result being lower than a second preset threshold, wherein the second control instruction is used to instruct the user equipment to activate the NCSG configuration, and the first preset threshold is greater than the second preset threshold.

15. The method according to claim 1, further comprising:
deactivating the NCSG configuration after a serving cell changes.

16. A cell measurement apparatus, comprising:
a first sending module, configured to send a Network Controlled Small Gap (NCSG) configuration for an L1 mobility measurement, wherein the NCSG configuration is used to instruct a user equipment to perform the L1 mobility measurement of a neighboring cell.

17. A cell measurement apparatus, comprising:
a first receiving module, configured to receive a Network Controlled Small Gap (NCSG) configuration for an L1 mobility measurement; and
a measurement module, configured to perform the L1 mobility measurement of a neighboring cell based on the NCSG configuration.

18. A cell measurement device, comprising:
a processor; and
a memory for storing processor-executable instructions, wherein
the processor is configured to perform steps of the method according to any one of claims 1 to 7, or perform steps of the method according to any one of claims 8 to 15.

19. A computer-readable storage medium, having computer program instructions stored thereon, wherein when the computer program instructions are executed by a processor, steps of the method according to any one of claims 1 to 7, or steps of the method according to any one of claims 8 to 15, are implemented.
